# EUROPEAN PATENT APPLICATION

(11) **EP 4 789 549 A1**
(43) Date of publication of application: **12.08.2026**
(21) Application number: 24874658.8
(22) Date of filing: 02.10.2024
(51) Int. Cl.: A23L 15/00, A23K 20/179, A23K 20/189, A23K 50/75, A23L 33/10

(54) **LUTEIN-RICH EGG, ZEAXANTHIN-RICH EGG, PROCESSED FOOD MATERIAL, METHOD FOR PRODUCING EGG, AND FEED FOR EGG-LAYING HENS**

(30) Priority: 03.10.2023 JP 2023171859; 01.10.2024 JP 2024172834; 01.10.2024 JP 2024172835
(71) Applicant: Takashima Sangyo Co. Ltd., Takamatsu-shi, Kagawa 761-1706 (JP)
(72) Inventor: TAKASHIMA, Hiroshi, Takamatsu-shi, Kagawa 761-1706 (JP)
(74) Representative: Plougmann Vingtoft a/s
(86) International application number: PCT/JP2024/035343
(87) International publication number: WO 2025/075058

(57) **Abstract**

[Object] Provided are a lutein-rich egg and a zeaxanthin-rich egg containing high concentrations of lutein and zeaxanthin, a processed food produced by processing the egg, a production method of the egg, and a feed for laying hens to be used for the production method.

[Solution] The lutein-rich egg of the present invention has a lutein content equal to or more than 2 mg per 100 g of edible portion of eggs. Accordingly, the lutein-rich egg of the present invention contains a high concentration of lutein, so that daily consumption of the egg by a human can lead to protection of human eyes from light stimulation and contribution to eye health maintenance, thereby helping to prevent risks of eye diseases.

## Description

### Technical Field

The present invention relates to a lutein-rich egg, a zeaxanthin-rich egg, a processed food, a method for producing an egg, and a feed for laying hens.

### Background Art

Eggs are cheap and highly nutritious food containing five major nutrients essential for a human body, i.e. carbohydrate, fat, protein, minerals, and vitamins, and further containing amino acids which cannot be made by a human body.

For example, eggs contain lutein known for its antioxidant properties. In recent years, it has been reported that intake of lutein can lead to increase in macular pigment and prevention of diseases, such as macular degeneration and cataract. In particular, it has been reported that 10 mg of lutein per day is desirable as an intake amount to increase macular pigment. Examples of the way of lutein intake for humans include intake from eggs which contain lutein, and intake from spinach or supplements. However, regarding the way of intake from spinach or supplements, it has been reported that an absorption rate in a human body is decreased to around one-half to one-third as compared with the intake from eggs. Therefore, for the purpose of effective absorption of lutein in a human body, it is preferable to take lutein from eggs.

Furthermore, besides lutein, it is becoming clear that zeaxanthin is critical for eye health. Since zeaxanthin is also contained in eggs, it is preferable to take zeaxanthin from eggs in view of effective absorption of zeaxanthin in a human body.

Then, since eggs contain both lutein and zeaxanthin, there is an advantage in eating eggs that it is possible to simultaneously take lutein and zeaxanthin from eggs.

However, regular eggs contain lutein and zeaxanthin respectively in an amount of about 0.4 mg and about 0.1 mg at most per 100 g of edible portion, and it is difficult to take sufficient amounts of lutein and zeaxanthin from eggs.

Hence, to increase the amount of lutein or zeaxanthin taken from eggs, attempts have been made to increase the amount of lutein or zeaxanthin contained in eggs. For example, the amount of lutein or zeaxanthin contained in eggs has been increased by adjusting feed to be fed to laying hens (see Patent Documents 1 to 3).

For example, Patent Document 1 discloses that addition of marigold and oregano to common feed can increase the amount of lutein up to 0.72 mg per 100 g of edible portion. Further, Patent Document 2 discloses that addition of a marigold extract to common feed can increase the amount of lutein up to 1.95 mg per 100 g of edible portion (6.5 mg per 100 g of egg yolk). Yet further, Patent Document 3 discloses that addition of spirulina algae to common feed can increase the amount of zeaxanthin up to 0.52 mg per 100 g of edible portion.

### Citation List

### Patent Literature

Patent Literature 1: Japanese Laid-Open Patent Publication No. 2007-20510
Patent Literature 2: Japanese Laid-Open Patent Publication No. 2003-102395
Patent Literature 3: Japanese Laid-Open Patent Publication No. H10-155430

### Disclosure of Invention

### Technical Problem

However, eggs produced by the production methods of Patent Documents 1 to 3 still do not contain enough amount of lutein for intake of the necessary amount of lutein from the eggs. Furthermore, the production method of Patent Document 3 uses spirulina algae, which is not usually used as feed, and cannot produce eggs with an increased zeaxanthin content by using common feed.

Additionally, eggs produced by the production methods of Patent Documents 1 to 3 contain either lutein or zeaxanthin in large amounts, but eggs rich in both lutein and zeaxanthin have not been disclosed.

In view of the above circumstances, the present invention has an object to provide a lutein-rich egg containing a high concentration of lutein, a zeaxanthin-rich egg containing a high concentration of zeaxanthin, a processed food produced by processing the egg, a production method of the egg, and a feed for laying hens to be used for the production method.

### Solution to Problem

A lutein-rich egg according to a first aspect of the present invention is a lutein-containing egg with a lutein content equal to or more than 2 mg per 100 of edible portion of eggs.

A lutein-rich egg according to a second aspect of the present invention is the egg according to the first aspect, wherein the lutein content is equal to or more than 2.5 mg per 100 g of edible portion of eggs.

A lutein-rich egg according to a third aspect of the present invention is the egg according to the second aspect, wherein the lutein content is equal to or more than 3.0 mg per 100 of edible portion of eggs.

A lutein-rich egg according to a fourth aspect of the present invention is the egg according to the first aspect, wherein a zeaxanthin content is equal to or more than 0.35 mg per 100 g of edible portion of eggs.

A lutein-rich egg according to a fifth aspect of the present invention is the egg according to the fourth aspect, wherein the zeaxanthin content is equal to or more than 0.38 mg per 100 g of edible portion of eggs.

A zeaxanthin-rich egg according to a sixth aspect of the present invention is an egg with a zeaxanthin content equal to or more than 0.35 mg per 100 g of edible portion of eggs.

A zeaxanthin-rich egg according to a seventh aspect of the present invention is the egg according to the sixth aspect, wherein the zeaxanthin content is equal to or more than 0.38 mg per 100 g of edible portion of eggs.

A processed food according to an eighth aspect of the present invention is produced by processing at least one of the lutein-rich egg and the zeaxanthin-rich egg according to any one of the first to seventh aspects.

A processed food according to a ninth aspect of the present invention is the processed food according to the eighth aspect, produced by freezing an edible portion of at least one of the lutein-rich egg and the zeaxanthin-rich egg.

A lutein-rich egg according to a tenth aspect of the present invention is the egg according to the first aspect, wherein the egg has a b-value of an egg yolk after heating at 100°C for 30 minutes equal to or more than twice a b-value of the egg yolk before the heating, the b-value being measured by using a colorimeter. The b-value of the egg yolk before the heating measured by using the colorimeter is measured on a liquid surface of the egg yolk by using the colorimeter after stirring the egg yolk separated from the egg in a container. The b-value of the egg yolk after the heating measured by using the colorimeter is measured on a cooked cross section of the egg yolk taken out of the container after the heating by using the colorimeter.

A method for producing an egg according to an eleventh aspect of the present invention includes consecutively feeding a feed containing 1000 EPU or more of xylanase per kg of the feed to a chicken to obtain an egg.

A method for producing an egg according to a twelfth aspect of the present invention is the method according to the eleventh aspect, wherein the feed contains 100 mg or more of lutein per kg of the feed.

A feed for laying hens according to a thirteenth aspect of the present invention contains 1000 EPU or more of xylanase per kg of the feed.

A feed for laying hens according to a fourteenth aspect of the present invention is the feed according to the thirteenth aspect, wherein the feed contains 100 mg or more of lutein per kg of the feed.

### Advantageous Effects of Invention

According to the first to ninth aspects of the present invention, due to the high concentration of lutein and/or zeaxanthin contained, daily intake by a human can prevent risks of eye diseases.

According to the tenth aspect of the present invention, it is possible to improve the appearance of food when cooked.

According to the eleventh and twelfth aspects of the present invention, it is possible to produce an egg containing a high concentration of lutein and/or zeaxanthin.

According to the thirteenth and fourteenth aspects of the present invention, it is possible to raise a laying hen capable of laying eggs containing a high concentration of lutein and/or zeaxanthin by feeding the feed to the laying hen.

### Brief Description of Drawings

FIG. 1 is a table showing experimental results in Examples 1 to 7 and Comparative Example 1;
FIG. 2 is a table showing experimental results in Example 8 and Comparative Example 2;
FIG. 3 is a table showing experimental results in Examples 9 and 10; and
FIG. 4 is a table showing experimental results from color evaluation of egg yolk.

### Description of Embodiments

Hereinafter, a lutein-rich egg, a zeaxanthin-rich egg, and a processed food of the present embodiments, a method for producing an egg of the present embodiment, and a feed for laying hens of the present embodiment will be described.

### <Feed for Laying Hens of Present Embodiment>

Firstly, the feed for laying hens of the present embodiment will be described.

The feed for laying hens of the present embodiment is used for raising laying hens, and produced by combining a basal feed with an additive feed.

The basal feed is commonly used as poultry feed. The basal feed contains corn as a main ingredient, for example, and is prepared by adding other ingredients such as animal raw materials for feed (fish meal, etc.), vegetable oil cake (soybean oil meal, rape oilseed meal, etc.), grains (wheat, etc.), brans (wheat bran, rice bran, etc.), calcium carbonate, and oyster shells. For example, the basal feed can be produced by preparing proportions of various kinds of commercially available feeds. Note that the ingredient contained in the basal feed is not limited to those described above, and ingredients generally employed as feed ingredients used for raising laying hens can be employed. Additionally, a proportion of each ingredient contained in the basal feed can be a proportion employed for common feed, but the proportion of each ingredient is not particularly limited and can be adjusted as appropriate depending on growing conditions and environment of laying hens to be fed, or other conditions. For example, by preparing the proportion of each ingredient, it is possible to properly adjust the amount of protein, etc. contained in the basal feed and the feed for laying hens of the present embodiment.

The additive feed to be combined with the basal feed is added to the basal feed to prepare an ingredient contained in the entire feed for laying hens of the present embodiment. In the feed for laying hens of the present embodiment, the additive feed for use is capable of increasing the amounts of lutein and zeaxanthin contained in the feed for laying hens. In other words, in the feed for laying hens of the present embodiment, those containing a raw material containing lutein and zeaxanthin as ingredients can be used as the additive feed. Examples of the raw material containing lutein and zeaxanthin include marigold (flower, petal, leaf), yellow corn (kernels), green leafy vegetables such as kale and spinach, chlorella, fruits such as kiwis and grapes, etc. A form of the raw material containing lutein and zeaxanthin as the additive feed to be combined with the basal feed is not particularly limited. For example, in a case of adding marigold as the additive feed, pulverized dried petals of marigold may be added, or marigold petals subjected to extraction processing with an organic solvent may be added. Furthermore, naturally occurring ones as described above can be employed as the raw material containing lutein and zeaxanthin, or the raw material containing lutein and zeaxanthin may be chemically synthesized.

The additive feed to be combined with the basal feed is prepared such that in the entire feed for laying hens, i.e. in a state that the basal feed is combined with the additive feed, a lutein or zeaxanthin content of the entire feed for laying hens is equal to or more than a certain amount. For example, the additive feed to be combined with the basal feed is prepared in an amount that makes the amount of lutein equal to or more than 100 mg per kg of the feed for laying hens, preferably equal to or more than 120 mg per kg of the feed for laying hens, and more preferably equal to or more than 150 mg per kg of the feed for laying hens. Note that in the state that the basal feed is combined with the additive feed, an upper limit of the lutein or zeaxanthin content of the entire feed for laying hens is not particularly limited.

Furthermore, the additive feed to be combined with the basal feed contains an enzyme having a function of hydrolyzing xylan. For example, an enzyme such as xylanase and amylase (koji mold) is preferably contained in the additive feed. In a case that xylanase is contained in the additive feed, the additive feed to be combined with the basal feed is prepared in an amount that makes the amount of xylanase equal to or more than 1000 EPU (Endopentsanase Units) per kg of the feed for laying hens, preferably equal to or more than 1200 EPU per kg of the feed for laying hens, and more preferably equal to or more than 1500 EPU per kg of the feed for laying hens. Note that in the state that the basal feed is combined with the additive feed, an upper limit of the xylanase content of the entire feed for laying hens is not particularly limited.

Note that EPU as the addition unit of xylanase means the amount of enzyme required to release 0.0083 µmol of reducing sugar equivalent (xylose equivalent) per minute from oat spelt xylan at pH 4.7 and 50°C.

As described above, the additive feed to be combined with the basal feed is prepared and a combination ratio of the additive feed to the basal feed is prepared such that the feed for laying hens of the present embodiment contains lutein and zeaxanthin as well as xylanase in the amounts as described above. Therefore, by supplying the feed for laying hens of the present embodiment to laying hens, it is possible to produce eggs containing high concentrations of lutein and zeaxanthin. That is, it becomes possible to transfer large amounts of lutein and zeaxanthin into eggs, which cannot be achieved by simply increasing the amounts of lutein and zeaxanthin contained in the feed for laying hens.

Then, by supplying the feed for laying hens of the present embodiment to laying hens, it becomes possible not only to transfer only one of lutein and zeaxanthin into eggs in large amounts, but also to transfer both lutein and zeaxanthin into eggs in large amounts. While lutein and zeaxanthin are contained in the raw material contained in the basal feed or the additive feed, the use of the feed for laying hens of the present embodiment also makes it possible to simultaneously transfer lutein and zeaxanthin into eggs in large amounts.

### <Egg Production Method of Present Embodiment>

The method for producing an egg of the present embodiment (hereinafter may be simply referred to as the present production method) includes consecutively feeding the feed for laying hens of the present embodiment (hereinafter may be simply referred to as the present laying hen feed) prepared as described above to an egg laying chicken (laying hen) while collecting eggs. By employing the present production method, it is possible to facilitate transfer of lutein and zeaxanthin into eggs, thereby efficiently producing eggs containing high concentrations of lutein and zeaxanthin.

Specifically, the present production method consecutively feeds the present laying hen feed for a predetermined period while raising a laying hen. For example, shortly before starting to collect the present lutein-rich egg from the laying hen, the present laying hen feed is consecutively fed to the laying hen. That is, the laying hen is raised such that at the time of collecting the present lutein-rich egg, the feeding period of the present laying hen feed to the laying hen is equal to or more than the predetermined period.

Note that in the present production method, when to start feeding the present laying hen feed is not particularly limited. For example, feeding of the present laying hen feed may be started from an introduction stage of a chick to a farm, or may be started at an adult chicken stage. Furthermore, depending on molting conditions, the feeding period of the present laying hen feed may be adjusted as appropriate during the growing phase. For example, the present laying hen feed is fed from the introduction stage of a chick to a farm, and feeding of the present laying hen feed is stopped during the molting phase while diets suitable for the molting phase is fed. Then, at a timing when quality of eggs becomes proper after the molting (for example, 7 weeks to 70 days after the molting, etc.), feeding of the present laying hen feed may be resumed.

A period from the start of feeding the feed for laying hens of the present embodiment to the start of collecting a desired egg (the lutein-rich egg or the zeaxanthin-rich egg of the present embodiment, hereinafter may be referred to as the present lutein-rich egg or the present zeaxanthin-rich egg) preferably corresponds to a period during which blood concentrations of lutein and zeaxanthin in a laying hen are increased enough to facilitate transfer of lutein and zeaxanthin into an egg. That is, after consecutively feeding the present laying hen feed until the lutein concentration or the zeaxanthin concentration contained in the present lutein-rich egg or the present zeaxanthin-rich egg becomes equal to or more than a concentration as described later, the present lutein-rich egg or the present zeaxanthin-rich egg is collected.

The consecutive use period of the present laying hen feed is, for example, 30 consecutive days or more, preferably 35 days or more, more preferably 40 days or more, and further preferably 45 days or more. Incidentally, the consecutive use period is a concept also including a case where feeding of the feed for laying hens is interrupted for about a few days, and it is not necessary to completely consecutively feed the present laying hen feed. That is, the feeding period of the present laying hen feed may be longer to a certain extent than a feeding period of other feed, and a case of intermittently feeding the present laying hen feed is also included in the consecutive use period.

Note that types of the laying hen to be raised by the present production method include commonly bred hens such as White Leghorn and Rhode Island Red, but are not limited to these types.

### <Lutein-Rich Egg of Present Embodiment>

The lutein-rich egg of the present embodiment is an egg containing a high concentration of lutein. Specifically, the lutein-rich egg of the present embodiment is an egg containing 2 mg or more of lutein per 100 g of edible portion of eggs. The lutein content of the lutein-rich egg of the present embodiment is equal to or more than 2 mg, preferably equal to or more than 2.8 mg, and more preferably equal to or more than 3.0 mg per 100 g of edible portion.

Furthermore, the lutein-rich egg of the present embodiment includes eggs containing a high concentration of zeaxanthin. Specifically, the lutein-rich egg of the present embodiment also includes an egg containing 0.35 mg or more, preferably 0.38 mg or more, and more preferably 4.0 mg or more of zeaxanthin per 100 g of edible portion of eggs.

In particular, the lutein-rich egg of the present embodiment also includes eggs containing high concentrations of both lutein and zeaxanthin. Specifically, the lutein-rich egg of the present embodiment also includes an egg containing 2 mg or more of lutein per 100 g of edible portion of eggs and 0.35 mg or more of zeaxanthin per 100 g of edible portion of eggs. Preferably, the lutein-rich egg of the present embodiment also includes an egg containing not only 2.8 mg or more of lutein per 100 g of edible portion of eggs, but also 0.35 mg or more of zeaxanthin per 100 g of edible portion of eggs. More preferably, the lutein-rich egg of the present embodiment also includes an egg containing not only 3.0 mg or more of lutein per 100 g of edible portion of eggs, but also 0.35 mg or more of zeaxanthin per 100 g of edible portion of eggs. Further preferably, the lutein-rich egg of the present embodiment also includes an egg containing not only 3.0 mg or more of lutein per 100 g of edible portion of eggs, but also 0.4 mg or more of zeaxanthin per 100 g of edible portion of eggs.

As described above, the lutein-rich egg of the present embodiment contains lutein and zeaxanthin so as to satisfy the above-described concentrations. Therefore, when consumed by a human, the lutein-rich egg of the present embodiment can be expected to increase retinal (macular) pigment, which is believed to protect eyes from light stimulation. That is, the lutein-rich egg of the present embodiment enables protection of human eyes from light stimulation and contribution to eye health maintenance, thereby helping to prevent risks of eye diseases in human eyes. Then, an amount of the lutein-rich egg of the present embodiment to be consumed by a human to prevent risks of eye diseases can be adjusted as appropriate depending on the physical condition, etc. of the human who consumes the egg. For example, by replacing an egg generally consumed daily by a human with the lutein-rich egg of the present embodiment, it becomes possible to prevent risks of eye diseases in that human eyes.

Specifically, the intake amount of lutein that can be expected to exert a function of increasing macular pigment is considered about 10 mg per day. Thus, in a case of a common medium-sized or larger egg (egg with an average weight of about 60 g or more and an edible portion of about 50 g or more), consumption of about 2 and a half or more, preferably 3 eggs per day enables to take, from the lutein-rich egg of the present embodiment, about 5 mg of lutein which is half the quantity of functional substance per day generally employed by the guidelines for foods with functional claims.

Furthermore, the lutein-rich egg of the present embodiment contains lutein in the amount equal to or more than the above value, so that yellowness of an egg yolk can be enhanced. Enhanced yellowness of the egg yolk can enhance appetite for food cooked using that egg. In particular, when the lutein-rich egg of the present embodiment is heated, yellowness of the egg yolk becomes deeper and more vivid. Accordingly, the lutein-rich egg of the present embodiment is more suitable as an egg used for cooking with heat.

### <Zeaxanthin-Rich Egg of Present Embodiment>

The zeaxanthin-rich egg of the present embodiment is an egg containing a high concentration of zeaxanthin. Specifically, the zeaxanthin-rich egg of the present embodiment is an egg containing 0.35 mg or more of zeaxanthin per 100 g of edible portion of eggs. The zeaxanthin content of the zeaxanthin-rich egg of the present embodiment is equal to or more than 0.35 mg, preferably equal to or more than 0.38 mg, and more preferably equal to or more than 0.40 mg per 100 g of edible portion.

In particular, the zeaxanthin-rich egg of the present embodiment also includes eggs containing high concentrations of both lutein and zeaxanthin. Specifically, the zeaxanthin-rich egg of the present embodiment also includes an egg containing 2 mg or more of lutein per 100 g of edible portion of eggs and 0.35 mg or more of zeaxanthin per 100 g of edible portion of eggs. Preferably, the zeaxanthin-rich egg of the present embodiment includes an egg containing 2.8 mg or more of lutein per 100 g of edible portion of eggs and 0.35 mg or more of zeaxanthin per 100 g of edible portion of eggs. More preferably, the zeaxanthin-rich egg of the present embodiment also includes an egg containing 3.0 mg or more of lutein per 100 g of edible portion of eggs and 0.35 mg or more of zeaxanthin per 100 g of edible portion of eggs. Further preferably, the zeaxanthin-rich egg of the present embodiment also includes an egg containing 3.0 mg or more of lutein per 100 g of edible portion of eggs and 0. 4 mg or more of zeaxanthin per 100 g of edible portion of eggs.

As described above, the zeaxanthin-rich egg of the present embodiment contains lutein and zeaxanthin so as to satisfy the above-described concentrations. Therefore, when consumed by a human, the zeaxanthin-rich egg of the present embodiment can be expected to increase retinal (macular) pigment, which is believed to protect eyes from light stimulation. That is, the zeaxanthin-rich egg of the present embodiment enables protection of human eyes from light stimulation and contribution to eye health maintenance, thereby helping to prevent risks of eye diseases in human eyes. Then, an amount of the zeaxanthin-rich egg of the present embodiment to be consumed by a human to prevent risks of eye diseases can be adjusted as appropriate depending on the physical condition, etc. of the human who consumes the egg. For example, by replacing an egg generally consumed daily by a human with the zeaxanthin-rich egg of the present embodiment, it becomes possible to prevent risks of eye diseases in that human eyes.

Note that in general, shell accounts for about 10%, egg white for about 60%, and egg yolk for about 30% of total mass of an egg. Further, since most of lutein and zeaxanthin in an egg is accumulated in an egg yolk, it is possible to more efficiently take lutein and zeaxanthin by consuming only an egg yolk of the lutein-rich egg of the present embodiment or the zeaxanthin-rich egg of the present embodiment.

Furthermore, the lutein-rich egg of the present embodiment and the zeaxanthin-rich egg of the present embodiment can be produced by raising a laying hen by the present production method using the feed for laying hens of the above-described embodiment. Moreover, as described above, the lutein-rich egg of the present embodiment and the zeaxanthin-rich egg of the present embodiment obtained by the present production method can contain conventionally unpredictable high concentrations of lutein and zeaxanthin.

Note that in the present description, a numerical range indicated by using "...to..." shall include a lower limit value and an upper limit value unless otherwise noted. For example, the phrase "1 to 10" shall include both the lower limit value "1" and the upper limit value "10". That is, "1 to 10" is used interchangeably with "1 or more and 10 or less".

Furthermore, in the present description, "%" and "ppm" values mean a weight ratio. In the present description, "1 mg/kg" is used interchangeably with "1 ppm". In the present description, the content is, unless otherwise noted, represented by a mass or weight ratio.

### <Processed Food of Present Embodiment>

The processed food of the present embodiment is food processed by using the lutein-rich egg of the present embodiment or the zeaxanthin-rich egg of the present embodiment. That is, the food contains large amounts of lutein and zeaxanthin, which are contained in the lutein-rich egg of the present embodiment or the zeaxanthin-rich egg of the present embodiment. The processed food of the present embodiment is not particularly limited, provided that the food is produced by using the lutein-rich egg of the present embodiment or the zeaxanthin-rich egg of the present embodiment. Examples of the processed food of the present embodiment include food processed straight from eggs, such as boiled egg and omelet, condiment and sauce using the lutein-rich egg of the present embodiment or the zeaxanthin-rich egg of the present embodiment as a raw material, such as mayonnaise, pasta sauce, and dressing, etc.

Furthermore, frozen egg produced from an egg, that is, frozen egg produced from the lutein-rich egg of the present embodiment or the zeaxanthin-rich egg of the present embodiment, is also included in the processed food of the present embodiment. The frozen egg means food obtained by breaking egg shell to take out only an edible portion, filtering this edible portion to remove the egg shell, etc., and then freezing the edible portion. That is, the processed food of the present embodiment also includes frozen egg obtained by cracking the shell of the lutein-rich egg of the present embodiment or the zeaxanthin-rich egg of the present embodiment to take out only an edible portion, filtering this edible portion to remove the egg shell, etc., and then freezing the edible portion.

### Examples

A feed for laying hens (corresponding to the feed for laying hens of the present embodiment) was fed to poultry (chicken under test) consecutively for 45 days or more, and a lutein content and a zeaxanthin content of a collected egg (corresponding to the lutein-rich egg of the present embodiment or the zeaxanthin-rich egg of the present embodiment) were confirmed.

In the experiment, a white leghorn laying hen was used as the chicken under test. Incidentally, the day when the feed for laying hens was fed to the chicken under test for the first time corresponds to the chicken age of 516 days, which corresponds to day 62 of molting of the chicken under test.

The feed for laying hens was fed to each chicken in a fixed amount of 110 g per day.

The lutein content and the zeaxanthin content of the egg were determined for eggs collected on day 45 of feeding of the feed for laying hens. The lutein content and the zeaxanthin content of the egg were obtained by high performance liquid chromatography (the analysis method of "carotene" in "Analysis methods for nutritional composition" (see the Attachment to "Notification regarding food labeling standards" (Shou-Shoku-Hyou No. 139, Notification of the Deputy Secretary-General of Consumer Affairs Agency, March 30, 2015), entitled "Analysis methods for nutritional composition"). Note that the lutein content and the zeaxanthin content of the egg were determined as an average value of a plurality of eggs of the same size collected on the same. Note that the size of the egg was classified as follows: egg weight of 58 to 64 g as size M, egg weight of 61 to 67 g as size LM, and egg weight of 64 to 70 g as size L.

The feed for laying hens fed to the chicken under test was prepared by combining the basal feed with a raw material containing lutein/zeaxanthin and a raw material containing xylanase as the additive feeds.

As the basal feed, a feed containing corn as a main ingredient was used (product name: Progress, manufactured by Nichiwa Sangyo Co., Ltd.).

As the raw material containing lutein of the additive feeds, a marigold petal extract was used (Seller: EW Nutrition Japan, product name: XAMACOL 40B, lutein content: 34.0 g/kg).

As the raw material containing xylanase of the additive feeds, a product containing xylanase as a main ingredient was used (manufactured by Huvepharm Japan, product name: Hostazym X^{®}, xylanase content: 15000 EPU/g).

A plurality of feeds for laying hens (Feed A, Aran 18, Aran 18α, Aran 19, and Aran 19α) prepared by combining the basal feed, the marigold petal extract, and Hostazym X as described above in the following proportions were fed to laying hens, and the lutein content and the zeaxanthin content of the egg laid under each condition were confirmed. The proportions of the basal feed, XAMACOL, and Hostazym X^{®} in each feed for laying hens were as follows.

Note that Feed A was fed in Example 1, Aran 18α in Example 2, Aran 19 in Examples 3 and 4, and Aran 19α in Examples 5 to 10, respectively.

### <Feed A>

Feed A was adjusted by combining 4.5 kg of XAMACOL and 100 g of Hostazym X^{®} per t of the feed for laying hens. That is, Feed A was adjusted by combining XAMACOL and Hostazym X such that the amount of lutein was 153 mg per kg of the feed for laying hens and the amount of xylanase was 1500 EPU per kg of the feed for laying hens.

### <Aran 18α>

Aran 18α was adjusted by combining 4.95 kg of XAMACOL and 100 g of Hostazym X^{®} per t of the feed for laying hens. That is, Aran 18α was adjusted by combining XAMACOL and Hostazym X such that the amount of lutein was 168.3 mg per kg of the feed for laying hens and the amount of xylanase was 1500 EPU per kg of the feed for laying hens. Incidentally, Aran 18α was prepared such that the percentage of protein in the feed for laying hens became 18 to 18.3%.

### <Aran 19>

Aran 19 was adjusted by combining 4.5 kg of XAMACOL and 100 g of Hostazym X^{®} per t of the feed for laying hens. That is, Aran 19 was adjusted by combining XAMACOL and Hostazym X such that the amount of lutein was 153 mg per kg of the feed for laying hens and the amount of xylanase was 1500 EPU per kg of the feed for laying hens. Incidentally, Aran 19 was prepared such that the percentage of protein in the feed for laying hens became 19 to 19.3%.

### <Aran 19α>

Aran 19α was adjusted by combining 4.95 kg of XAMACOL and 100 g of Hostazym X^{®} per t of the feed for laying hens. That is, Aran 19α was adjusted by combining XAMACOL and Hostazym X such that the amount of lutein was 168.3 mg per kg of the feed for laying hens and the amount of xylanase was 1500 EPU per kg of the feed for laying hens. Incidentally, Aran 19α was prepared such that the percentage of protein in the feed for laying hens became 19 to 19.3%.

Note that in Comparative Example 1, the chicken under test was raised using the same method as in Examples except that the feed contained only the basal feed (Progress only).

Furthermore, in Comparative Example 2, the chicken under test was raised using the same method as in Examples except that the feed contained only the basal feed (Progress only).

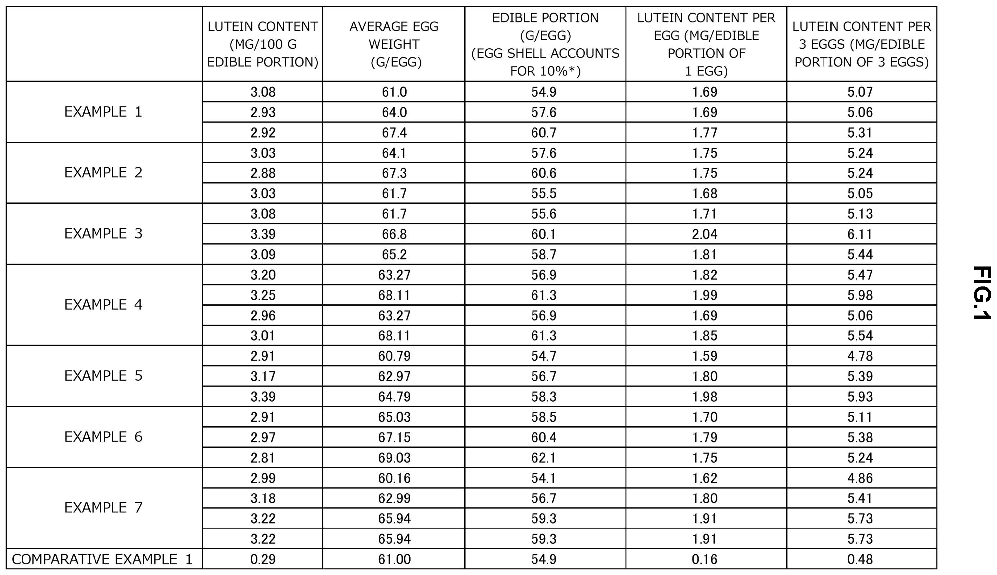

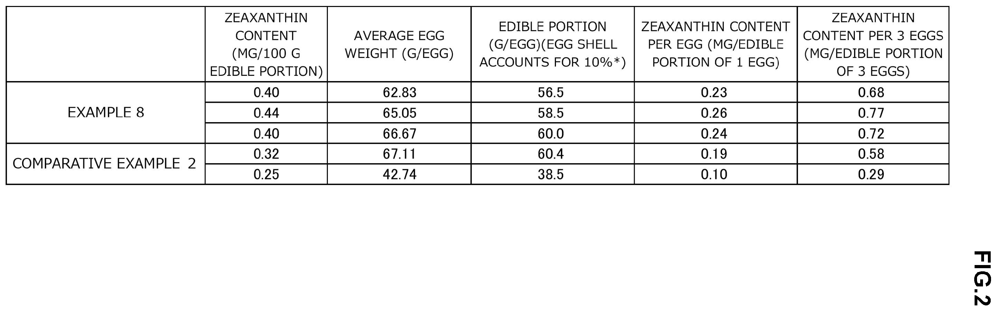

The experimental results are shown in FIGs. 1 and 2.

As shown in FIG. 1, in the experiments in Examples 1 to 7, it was confirmed that the eggs containing a higher concentration of lutein could be produced as compared with Comparative Example 1.

As shown in FIG. 1, it was confirmed that in the lutein-rich egg of the present invention, the minimum lutein content was 2.81 mg/100 mg edible portion and the maximum lutein content was 3.39 mg/100 mg edible portion. Furthermore, it was confirmed that although varied depending on the correction period of the eggs and the average egg weight, the lutein content of the eggs collected during the same period (i.e. eggs in the same Example) was equal to or more than 1.59 mg per egg on average.

Additionally, as shown in FIG. 1, the average egg weight (weight including shell) of the eggs employed by the experiments in Examples 1 to 7 is equal to or more than 60 g, and the lutein content of the eggs employed in the experiments in Examples 1 to 7 is 1.79 mg per egg on average. That is, for the lutein-rich egg of the present invention, the lutein content can be estimated to be 1.79 mg per egg with the egg weight (weight including shell) of 60 g or more on average. Thus, it can be estimated that if consuming three lutein-rich eggs of the present invention per day, 5 mg of lutein can be easily taken, i.e. 50% of the intake amount of 10 mg per day, which can be expected to exert a function of increasing macular pigment.

Furthermore, as shown in FIG. 2, in the experiment in Example 8, it was confirmed that the eggs containing a higher concentration of zeaxanthin could be produced as compared with Comparative Example 2 (an average value per 100 mg of edible portion was equal to or more than 0.41 mg, while an average value per egg was equal to or more than 0.24 mg).

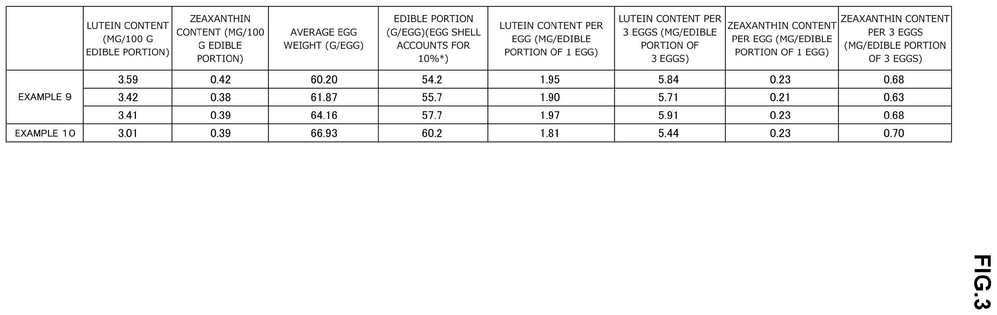

Furthermore, as shown in FIG. 3, in the experiments in Examples 9 and 10, it was confirmed that the eggs could be produced, in which the lutein content per egg was equal to or more than 1.90 mg on average, and the zeaxanthin content per egg was equal to or more than 0.21 mg on average. That is, it was confirmed that the eggs containing high concentrations of both lutein and zeaxanthin could be produced.

### <Color Evaluation of Egg Yolk>

Next, the egg of Example 11 (lutein-rich egg of the present invention) was evaluated for color of a sample egg yolk.

Note that in Example 11, the same feed (Feed A) as in Example 1 was used.

Measurement instrument: CR-400/DP-400 was used (manufactured by KONICA MINOLTA JAPAN, INC., CR refers to the model number of the chroma meter, DP refers to the model number of the data processor). In the evaluation, an L-value indicates lightness, where the value 0 indicates black and the value 100 indicates white; an a-value indicates redness, where the higher the value, the stronger the redness; and a b-value indicates yellowness, where the higher the value, the stronger the yellowness.

The measurement method using whole egg is as follows.

Each sample egg was cracked and put in a plastic cup, and the sample with chalaza still attached was lightly stirred with a glass rod, followed by stirring with Polytron (15,000 rpm, 30 seconds). 16 g to 17 g of the stirred sample was put in an aluminum cup (size 6) (about two-third of the aluminum cup), and bubbles on the surface were removed. Then, on the liquid surface from which the bubbles were removed, one-point measurement by the chroma meter was conducted (measurement results of the raw eggs in the table).

Next, after heating at 100°C for 30 minutes, the aluminum cup was peeled off, the heated sample was cut horizontally to the burnt surface, and one-point measurement by the chroma meter was conducted on the cross section (measurement results of the cooked eggs in the table).

The measurement method using only egg yolk is as follows.

Only an egg yolk liquid was separated from a sample egg, and the separated egg yolk each was put in an aluminum cup (size 6). It was stirred well in the aluminum cup to remove bubbles on the surface. Then, on the liquid surface from which the bubbles were removed, one-point measurement by the chroma meter was conducted (measurement results of the raw eggs in the table).

Next, after heating at 100°C for 30 minutes, the aluminum cup was peeled off, the heated sample was cut horizontally to the burnt surface, and one-point measurement by the chroma meter was conducted on the cross section (measurement results of the cooked eggs in the table).

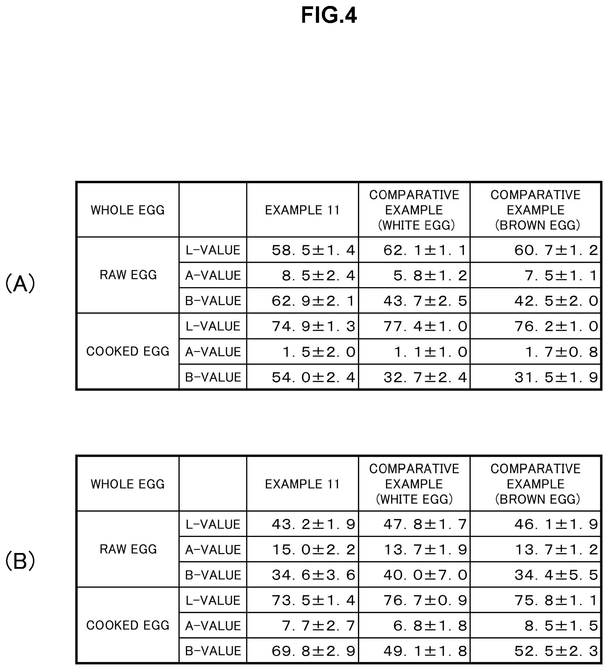

The results are shown in FIG. 4.

According to the results in FIG. 4, regarding the whole egg of the lutein-rich egg of the present invention, both the raw egg and the cooked egg showed significantly higher yellowness and more vivid appearance, as compared with Comparative Examples. Particularly, the cooked egg showed remarkable difference in the yellowness (b-value), i.e. about twice the value of Comparative Examples.

Additionally, in the measurement results of only the egg yolk of the lutein-rich egg of the present invention, the raw egg gave the appearance of slightly strong redness, while the cooked egg showed significantly higher yellowness and more vivid appearance as compared with Comparative Examples.

According to the above results, it can be seen that by using the method for producing an egg of the present invention to consecutively feed the feed for laying hens of the present invention to a laying hen, transfer of lutein and zeaxanthin into an egg can be properly promoted. Further, in the lutein-rich egg and the zeaxanthin-rich egg produced by the method for producing an egg of the present invention, it can be seen that concentrations of lutein and zeaxanthin contained in an egg can be increased to a level that has not been achieved by the conventional arts. For example, with the lutein-rich egg, it is also possible to realize the value of 2.9 mg or more per 100 g of edible portion.

Accordingly, the lutein-rich egg and the zeaxanthin-rich egg of the present invention are suitable as food for intake of lutein and zeaxanthin, and consumption of about three eggs with an egg weight of about 60 g or more per day can be expected to prevent risks of eye diseases.

### Industrial Applicability

The lutein-rich egg of the present invention and the zeaxanthin-rich egg of the present invention are suitable as food for intake of lutein and zeaxanthin. Furthermore, the feed for laying hens and the method for producing an egg of the present invention are suitable for an egg containing high concentrations of lutein and zeaxanthin.

## Claims

1. A lutein-rich egg with a lutein content equal to or more than 2 mg per 100 g of edible portion of eggs.

2. The lutein-rich egg according to claim 1, wherein the lutein content is equal to or more than 2.8 mg per 100 g of edible portion of eggs.

3. The lutein-rich egg according to claim 2, wherein the lutein content is equal to or more than 3.0 mg per 100 g of edible portion of eggs.

4. The lutein-rich egg according to claim 1, wherein a zeaxanthin content is equal to or more than 0.35 mg per 100 g of edible portion of eggs.

5. The lutein-rich egg according to claim 4, wherein the zeaxanthin content is equal to or more than 0.38 mg per 100 g of edible portion of eggs.

6. A zeaxanthin-rich egg with a zeaxanthin content equal to or more than 0.35 mg per 100 g of edible portion of eggs.

7. The zeaxanthin-rich egg according to claim 6, wherein the zeaxanthin content is equal to or more than 0.38 mg per 100 g of edible portion of eggs.

8. A processed food according to claim 1, produced by processing at least one of the lutein-rich egg and the zeaxanthin-rich egg according to any one of claims 1 to 7.

9. The processed food according to claim 8, produced by freezing an edible portion of at least one of the lutein-rich egg and the zeaxanthin-rich egg according to any one of claims 1 to 7.

10. The lutein-rich egg according to claim 1, wherein
the egg has a b-value of an egg yolk after heating at 100°C for 30 minutes equal to or more than twice a b-value of the egg yolk before the heating, the b-value being measured by using a colorimeter,
the b-value of the egg yolk before the heating measured by using the colorimeter is measured on a liquid surface of the egg yolk by using the colorimeter after stirring the egg yolk separated from the egg in a container, and
the b-value of the egg yolk after the heating measured by using the colorimeter is measured on a cooked cross section of the egg yolk taken out of the container after the heating by using the colorimeter.

11. A method for producing an egg, comprising consecutively feeding a feed comprising 1000 EPU or more of xylanase per kg of the feed to a chicken to obtain an egg.

12. The method for producing an egg according to claim 11, wherein the feed comprises 100 mg or more of lutein per kg of the feed.

13. A feed for laying hens, comprising 1000 EPU or more of xylanase per kg of the feed.

14. The feed for laying hens according to claim 13, wherein the feed comprises 100 mg or more of lutein per kg of the feed.
